# EUROPÄISCHE PATENTSCHRIFT

(11) **EP 3 067 603 B1**
(45) Veröffentlichungstag und Bekanntmachung des Hinweises auf die Patenterteilung: **24.04.2019**
(21) Anmeldenummer: 15158775.5
(22) Anmeldetag: 12.03.2015
(51) Int. Cl.: F16K 37/00, F24D 3/10

(54) **HYDRAULISCHES VENTIL**
HYDRAULIC VALVE
VANNE HYDRAULIQUE

(43) Veröffentlichungstag der Anmeldung: 14.09.2016
(73) Patentinhaber: Grundfos Holding A/S, 8850 Bjerringbro (DK)
(72) Erfinder: Sørensen, Søren Emil, 8860 Ulstrup (DK); Hovmand, Per, 8930 Randers NØ (DK); Mikkelsen, Steen, 8850 Bjerringbro (DK); Milthers, Jens Kjær, 9530 Støvring (DK); Jensen, Kim Hulegaard, 8840 Rødkærsbro (DK); Aarestrup, Jan Carøe, 8850 Bjerringbro (DK)
(74) Vertreter: Patentanwälte Vollmann Hemmer Lindfeld Partnerschaft mbB

(56) Entgegenhaltungen:
- EP-A1- 0 679 821
- EP-A1- 1 367 306
- DE-U1- 20 103 992
- US-A1- 2010 305 883

## Beschreibung

Die Erfindung betrifft ein hydraulisches Ventil, insbesondere ein hydraulisches Ventil für eine Heizungs- und/oder Kühlanlage.

Es sind hydraulische Ventile bekannt, welche zur Regulierung des Durchflusses eines flüssigen Wärmeträgers, beispielsweise Wasser, in einer Heizungs- und/oder Kühlanlage verwendet werden. Derartige Ventile weisen in der Regel ein bewegliches Ventilelement auf, welches durch einen elektrischen Antrieb bewegt wird. Zur Regelung derartiger Ventile wird in der Regel die Wärmezufuhr oder -abfuhr über die an die Ventile angeschlossenen Lastkreise erfasst. Hierzu ist in der Regel eine Temperaturmessung in dem jeweiligen Lastkreis erforderlich.

EP 0 679 821 A1, EP 1 367 306 A1 sowie DE 201 03 992 U1 offenbaren verschiedene hydraulische Ventilanordnungen, welche jeweils ein Ventilgehäuse mit einem im Inneren des Ventilgehäuses angeordneten Ventileinsatz aufweisen.

US 2010/0305883 A1 offenbart ein Überdruckventil mit einem integrierten Temperatursensor.

Es ist Aufgabe der Erfindung, ein hydraulisches Ventil bereitzustellen, in welchem auf verbesserte Weise die Temperatur des durch das Ventil strömenden Mediums erfasst werden kann.

Diese Aufgabe wird gelöst durch ein hydraulisches Ventil mit den in Anspruch 1 angegebenen Merkmalen sowie durch einen hydraulischen Verteiler mit den in Anspruch 15 angegebenen Merkmalen. Bevorzugte Ausführungsformen ergeben sich aus den Unteransprüchen, der Beschreibung sowie den Figuren.

Das erfindungsgemäße hydraulische Ventil ist bevorzugt vorgesehen bzw. angepasst zur Verwendung in einer Kühl- und/oder Heizungsanlage und dient der Regulierung des Durchflusses eines flüssigen Mediums, insbesondere eines Wärmeträgers wie beispielsweise Wasser. Dazu weist das hydraulische Ventil ein Ventilgehäuse auf, in welchem zumindest ein erster Strömungsweg definiert ist, durch welchen das genannte Medium, beispielweise ein Wärmeträger, strömen kann. Darüber hinaus ist im Inneren des Ventilgehäuses ein Ventileinsatz angeordnet, welcher ein bewegliches Ventilelement aufweist. Der Ventileinsatz kann entnehmbar in das Ventilgehäuse eingesetzt sein, aber auch fest mit dem Ventilgehäuse verbunden, z. B. vergossen sein. Das Ventilelement ist in dem genannten ersten Strömungsweg gelegen, um den Strömungsquerschnitt dieses Strömungsweges verändern zu können. Bevorzugt ist das Ventilelement so angeordnet, dass der Strömungsweg ebenfalls vollständig geschlossen werden kann. Durch die Bewegung des Ventilelementes kann der Durchfluss durch den Strömungsweg reguliert werden. Bevorzugt wird das Ventilelement zu seiner Bewegung durch einen elektrischen Antrieb, beispielsweise einen elektromotorischen, elektromagnetischen oder elektrothermischen Antrieb angetrieben.

Zur Temperaturerfassung ist an oder in dem Ventilgehäuse ferner ein Infrarot-Temperatursensor vorgesehen. Dieser Infrarot-Temperatursensor ist so gerichtet, dass er auf eine Oberfläche des genannten Ventileinsatzes oder auf eine Oberfläche eines mit dem Ventileinsatz verbundenen Wärmeleiters blickt. So kann der Infrarot-Temperatursensor die Temperatur dieser Oberfläche an dem Ventileinsatz oder dem Wärmeleiter erfassen. Da der Ventileinsatz in wärmeleitender Verbindung mit dem durch das Ventil bzw. den Ventileinsatz strömenden Medium ist, kann so an der Oberfläche indirekt zumindest näherungsweise die Temperatur dieses Mediums von dem Infrarot-Temperatursensor erfasst werden. Auch ein mit dem Ventileinsatz verbundener Wärmeleiter steht über den Ventileinsatz mit dem durch das Ventil strömenden Mediums in wärmeleitender Verbindung, so dass an der Oberfläche des Wärmeleiters von dem Infrarot-Temperatursensor indirekt zumindest näherungsweise die Temperatur des Mediums, welches durch den Strömungsweg strömt, erfasst werden kann. Die Verwendung eines solchen Infrarot-Temperatursensors hat den Vorteil, dass auf eine direkte Temperaturmessung in dem Strömungsweg verzichtet werden kann. Es ist somit nicht erforderlich, einen Temperatursensor direkt in dem Strömungsweg anzuordnen, so dass keine Abdichtung eines Temperatursensors gegenüber dem Strömungsweg erforderlich ist. Der Temperatursensor, das heißt der Infrarot-Temperatursensor, ist vielmehr außerhalb des Strömungsweges gelegen und somit auch vor dem im Strömungsweg strömenden Medium, insbesondere vor Feuchtigkeit, geschützt. Der Infrarot-Temperatursensor kann vollständig in einem trockenen Bereich des Ventilgehäuses angeordnet werden.

Gemäß einer bevorzugten Ausführungsform ist in dem Ventilgehäuse ein zweiter von dem ersten Strömungsweg getrennter Strömungsweg ausgebildet. In einem solchen zweiten Strömungsweg kann gemäß einer speziellen Ausführungsform ein zweiter Ventileinsatz mit einem zweiten beweglichen Ventilelement gelegen sein. Besonders bevorzugt jedoch ist der zweite Strömungsweg frei von Ventilen und weist einen konstanten unveränderlichen Strömungsquerschnitt auf. Die Ausgestaltung eines Ventils mit zwei Strömungswegen ist besonders für den Anschluss von Heiz- bzw. Kühlkreisen in einem Heizungs- und/oder Kühlsystem geeignet. Diese Heiz- und/oder Kühlkreise (Lastkreise) weisen einen Vor- und einen Rücklauf auf. Der Vorlauf kann an dem zweiten Strömungsweg angeschlossen werden, während der Rücklauf an dem ersten Strömungsweg angeschlossen wird. Über die Regulierung des Strömungsquerschnittes in dem ersten Strömungsweg wird somit der Durchfluss durch den Rücklauf und somit der Durchfluss durch den gesamten Lastkreis reguliert. Die Temperaturmessung an dem ersten Strömungsweg dient dann der Erfassung der Rücklauftemperatur des Lastkreises, welche in derartigen Anlagen in der Regel zur Erfassung des Wärmebedarfes und zur Regulierung des Durchflusses herangezogen wird. Wenn in dem Ventilgehäuse zwei derartige Strömungswege vorgesehen sind, ist es bevorzugt, dass der Ventileinsatz, welcher in dem ersten Strömungsweg gelegen ist, gegenüber dem zweiten Strömungsweg thermisch isoliert ist, so dass er lediglich mit dem Medium in dem ersten Strömungsweg in wärmeleitender Verbindung ist und von dem Infrarot-Temperatursensor in der beschriebenen Weise die Temperatur in dem ersten Strömungsweg und nicht die Temperatur in dem zweiten Strömungsweg erfasst wird. Es ist zu verstehen, dass umgekehrt auch der erste Strömungsweg als Vorlauf und der zweite Strömungsweg als Rücklauf dienen könnte.

Das Ventilgehäuse ist vorzugsweise aus Kunststoff oder einem Kunststoff-Komposit-Material gefertigt. Vorzugsweise ist das Ventilgehäuse als einstückiges Bauteil, beispielweise im Spritzguss, gefertigt. Dies ermöglicht eine kostengünstige Fertigung des Ventilgehäuses, auch wenn dieses eine komplexe Form aufweist. Bei einem Kunststoff-Komposit-Material kann es sich beispielsweise um einen faserverstärkten Kunststoff handeln. Wie unten beschrieben wird, ist das Material des Ventilgehäuses vorzugsweise ein Material von geringer thermischer Wärmeleitfähigkeit bzw. wirkt thermisch isolierend. Dadurch wird verhindert, dass die Temperatur des Ventileinsatzes, welche von dem Infrarot-Temperatursensor erfasst wird, durch eine Wärmezufuhr oder - abfuhr über das Ventilgehäuse beeinflusst wird.

Erfindungsgemäß ist zumindest ein Abschnitt des Ventileinsatzes, an welchem die Oberfläche gelegen ist, auf welche der Infrarot-Temperatursensor gerichtet ist, oder der Wärmeleiter aus einem Material gefertigt, welches eine größere Wärmeleitfähigkeit als das Material des Ventilgehäuses aufweist. Der Ventileinsatz und/oder der Wärmeleiter sind vorzugsweise aus einem gut wärmeleitenden Material gefertigt, während das Ventilgehäuse vorzugsweise aus einem thermisch isolierenden Material gefertigt ist. So ist sichergestellt, dass die Temperatur an der Oberfläche, auf welche der Infrarot-Temperatursensor gerichtet ist, im Wesentlichen nur von der Temperatur des Mediums, welches durch den ersten Strömungsweg strömt, abhängig ist und nicht von einer Wärmezufuhr und/oder -abfuhr über das Ventilgehäuse beeinflusst wird.

Alternativ und/oder zusätzlich können der Ventileinsatz und/oder der Wärmeleiter gegenüber dem Ventilgehäuse thermisch isoliert sein. Das heißt es kann beispielsweise ein thermisch isolierendes Material zwischen dem Wärmeleiter und dem Ventilgehäuse und/oder zwischen dem Ventileinsatz und dem Ventilgehäuse zur thermischen Isolierung angeordnet sein. So kann beispielsweise auch eine thermisch isolierende Beschichtung auf dem Ventilgehäuse und/oder dem Ventileinsatz bzw. dem Wärmeleiter vorgesehen sein. Das thermisch isolierende Material kann beispielsweise ein Kunststoffmaterial mit thermisch isolierenden Eigenschaften sein.

Weiter bevorzugt ist der Ventileinsatz zumindest in einem Abschnitt, an welchem die Oberfläche gelegen ist, auf welche der Infrarot-Temperatursensor gerichtet ist, oder mit welchem der Wärmeleiter in Kontakt ist, aus Metall oder einem wärmeleitenden Kunststoff-Komposit-Material gefertigt. Das heißt der Ventileinsatz ist derart wärmeleitend ausgebildet, dass er eine wärmeleitende Verbindung von dem Medium, welches durch den ersten Strömungsweg strömt, zu der Oberfläche herstellt, auf welche der Infrarot-Temperatursensor gerichtet ist. Alternativ stellt der Ventileinsatz eine wärmeleitende Verbindung zwischen dem Medium und einer Anlagefläche zu dem Wärmeleiter her. Der Wärmeleiter selber ist bevorzugt ebenfalls aus einem gut wärmeleitenden Material, insbesondere aus Metall oder einem wärmeleitenden Kunststoff-Komposit-Material gefertigt. Ein solches Kunststoff-Komposit-Material kann beispielsweise ein Kunststoffmaterial sein, welchem wärmeleitende Partikel, wie Metallpartikel zugesetzt sind. Während der Ventileinsatz und/oder der Wärmeleiter bevorzugt aus Metall oder einem Kunststoff mit zugesetzten Metallpartikeln gefertigt sind, ist das Ventilgehäuse vorzugsweise aus einem schlechter wärmeleitenden Kunststoff, das heißt einem thermisch isolierenden Kunststoff, gefertigt.

Dasjenige Bauteil bzw. derjenige Abschnitt des Ventileinsatzes, an welchem die Oberfläche gelegen ist, auf welche der Infrarot-Temperatursensor gerichtet ist, oder mit welchem der Wärmeleiter in Kontakt ist, ist vorzugsweise derart ausgebildet, dass das Bauteil bzw. der Abschnitt in einem von der Oberfläche oder dem Wärmeleiter beabstandeten Bereich in direkten Kontakt mit einem in einem Strömungsweg, vorzugsweise dem ersten Strömungsweg, befindlichen Fluid kommt. So wird eine Wärmeübertragung von dem Medium bzw. Fluid, welches durch den Strömungsweg strömt, auf den Ventileinsatz gewährleistet, wobei die Wärme dann weiter von dem Ventileinsatz zu der Oberfläche, auf welche der Temperatursensor gerichtet ist, oder zu dem Wärmeleiter hin geleitet wird. So kann von dem Infrarot-Temperatursensor die Temperatur des Mediums bzw. Fluids indirekt und zumindest näherungsweise gemessen werden. Der Ventileinsatz kann mit dem ersten Strömungsweg oder, sofern ein solcher vorhanden ist, auch mit dem zweiten Strömungsweg verbunden sein, je nachdem in welchem der Strömungswege der Ventileinsatz angeordnet ist. Für den Fall, dass in beiden Strömungswegen ein entsprechender Ventileinsatz angeordnet ist, können auch beide Ventileinsätze in entsprechender Weise ausgebildet sein, so dass mit zwei entsprechenden Infrarot-Temperatursensoren auch die Temperaturen in beiden Strömungswegen erfasst werden können.

Weiter bevorzugt liegt dasjenige Bauteil des Ventileinsatzes bzw. derjenige Abschnitt des Ventileinsatzes, an welchem die Oberfläche gelegen ist, auf welche der Infrarot-Temperatursensor gerichtet ist, oder mit welchem der Wärmeleiter in Kontakt ist, außerhalb eines Strömungsweges, vorzugsweise des ersten Strömungsweges, in einem gegenüber diesem Strömungsweg abgedichteten Bereich. So bildet der Ventileinsatz eine Brücke zwischen dem nassen Bereich des Ventiles, in welchem das Fluid bzw. Medium, dessen Temperatur erfasst werden soll, strömt und einem trockenen Bereich des Ventilgehäuses, in welchem der Infrarot-Temperatursensor gelegen ist. Der Ventileinsatz überträgt dabei in der vorangehend beschriebenen Weise die Wärme von dem Fluid bzw. Medium zu einer Oberfläche oder einem Wärmeleiter, auf welche der Infrarot-Temperatursensor zur Temperaturmessung gerichtet ist. Durch die Abdichtung des Bereiches, in welchem der Infrarot-Temperatursensor gelegen ist gegenüber dem Strömungsweg wird sichergestellt, dass der Infrarot-Temperatursensor vor dem Medium bzw. Fluid, insbesondere Feuchtigkeit geschützt ist.

Gemäß einer bevorzugten Ausführungsform der Erfindung weist der Ventileinsatz ein Trägerelement auf, in oder an welchem das Ventilelement beweglich gelagert ist, wobei das Trägerelement vorzugsweise aus Metall oder einem Kunststoff-Komposit-Material, insbesondere einem wärmeleitfähigen Kunststoff-Komposit-Material gefertigt ist. Ein solches Kunststoff-Komposit-Material kann, wie oben beschrieben, beispielsweise ein Kunststoffmaterial mit eingebetteten wärmeleitenden Partikeln, beispielsweise Metallpartikeln sein. In dem Fall, dass das Trägerelement wärmeleitend aus Metall oder einem Kunststoff-Komposit-Material gefertigt ist, kann das Trägerelement als wärmeleitendes Element zwischen dem Medium bzw. Fluid, dessen Temperatur bestimmt werden soll, und der Oberfläche, auf welche der Infrarot-Temperatursensor gerichtet ist, oder dem Wärmeleiter fungieren. Besonders bevorzugt ist die Oberfläche, auf welche der Infrarot-Temperatursensor gerichtet ist, direkt an dem Trägerelement ausgebildet oder der Wärmeleiter ist mit dem Trägerelement in wärmeleitender Verbindung bzw. wärmeleitender Anlage. Wenn der Wärmeleiter wärmeleitend an dem Ventileinsatz, insbesondere dessen Trägerelement anliegt, kann zwischen dem Wärmeleiter und dem Ventileinsatz bzw. Trägerelement noch ein wärmeleitendes Medium wie eine Wärmeleitpaste eingebracht sein, um den Wärmeübergang zu verbessern.

Der Ventileinsatz und insbesondere ein Trägerelement des Ventileinsatzes sind vorzugsweise in eine Ventilaufnahme des Ventilgehäuses eingesetzt, wobei zwischen dem Ventileinsatz und dem Ventilgehäuse oder zwischen dem Trägerelement und dem Ventilgehäuse vorzugsweise zumindest eine Dichtung angeordnet ist. Eine solche Dichtung kann beispielsweise von einem oder mehreren O-Ringen gebildet werden. Die Dichtung dient dazu den Strömungsweg bzw. den nassen Bereich des Ventilgehäuses gegenüber dem trockenen Bereich, in welchem der elektrische Antrieb und elektrisch bzw. elektronische Bauteile, wie der Infrarot-Temperatursensor gelegen sind, abzudichten.

Der Ventileinsatz kann ein Bauteil sein, welches nach der Fertigung des Ventilgehäuses in dieses eingesetzt und mit diesem verbunden wird. Bevorzugt wird bei einer solchen Ausgestaltung der Ventileinsatz lösbar bzw. entnehmbar in das Ventilgehäuse eingesetzt, sodass er gegebenenfalls wieder ausgetauscht werden kann. Alternativ ist es auch möglich, den Ventileinsatz mit dem Ventilgehäuse fest zu verbinden. Gemäß einer besonderen Ausführungsform der Erfindung ist es auch möglich, den Ventileinsatz stoffschlüssig mit dem Ventilgehäuse zu verbinden, insbesondere den Ventileinsatz in das Ventilgehäuse einzugießen. Wenn der Ventileinsatz aus Metall gefertigt ist, kann er beispielsweise vor dem Spritzgießen eines Ventilgehäuses aus Kunststoff in das Werkzeug eingelegt werden, sodass er von dem Kunststoff des Ventilgehäuses zumindest abschnittsweise umschlossen wird. So kann eine feste und dichte Verbindung zwischen Ventileinsatz und Ventilgehäuse geschaffen werden. Wenn der Ventileinsatz oder dessen Trägerelement ebenfalls aus Kunststoff gefertigt ist, ist es beispielsweise möglich, den Ventileinsatz zusammen mit dem Ventilgehäuse im Zweikomponentenspritzguss zu fertigen.

Wenn der Ventileinsatz oder dessen Trägerelement in das Ventilgehäuse eingegossen wird, ist es darüber hinaus auf einfache Weise möglich, diesen Ventileinsatz bzw. dessen Trägerelement derart einzugießen, dass er auf der einen Seite mit dem Strömungsweg und dem darin befindlichen Fluid in Kontakt kommt, während jedoch auf der anderen Seite die Oberfläche, auf welche der Temperatursensor gerichtet ist, in einem trockenen Bereich des Ventilgehäuses liegen kann.

Das Ventilelement ist vorzugsweise an einem Spindeltrieb oder Getriebeantrieb gelagert, wobei der Spindeltrieb oder Getriebeantrieb vorzugsweise in dem Trägerelement gelegen bzw. befestigt sind. Über den Spindeltrieb oder Getriebeantrieb wird das Ventilelement bewegt, insbesondere linear bewegt. Ein solcher Antrieb kann insbesondere dazu dienen, eine drehende Antriebsbewegung, wie sie beispielsweise von einem elektrischen Antriebsmotor bereitgestellt wird, in eine Linearbewegung des Ventilelementes umzusetzen.

Das Ventilgehäuse weist vorzugsweise ein Elektronikaufnahmeraum auf, in welchem der Infrarot-Temperatursensor, vorzugsweise an einer Leiterplatte, angeordnet ist. Neben dem Infrarot-Temperatursensor können in dem Elektronikaufnahmeraum weitere elektrische und/oder elektronische Bauteile angeordnet sein. Insbesondere können derartige Bauteile mit dem Infrarot-Temperatursensor auf derselben Leiterplatte angeordnet sein. Der Elektronikaufnahmeraum beherbergt besonders bevorzugt elektronische Bauteile, welche zur Ansteuerung eines elektrischen Antriebes für das Ventilelement dienen. Vorzugsweise ist in dem Elektronikaufnahmeraum eine Leiterplatte angeordnet, welche neben dem Infrarot-Temperatursensor alle weiteren elektrischen und elektronischen Bauteile für das Ventil trägt, so dass eine sehr einfache Montage dieser elektrischen und elektronischen Bauteile möglich ist. An der Leiterplatte sind weiter bevorzugt auch die erforderlichen elektrischen Anschlüsse zur elektrischen Kontaktierung des Ventils mit einer Stromversorgung und gegebenenfalls einer externen Steuereinrichtung ausgebildet.

Der Elektronikaufnahmeraum ist bevorzugt von der Ventilaufnahme durch eine Wandung getrennt, welche weiter bevorzugt einstückig mit dem Ventilgehäuse ausgebildet ist. Besonders bevorzugt ist die Wandung zwischen Ventilaufnahme und Elektronikaufnahmeraum vollständig geschlossen, so dass die Wandung ein mögliches Eindringen von Feuchtigkeit aus dem Ventilaufnahmeraum in den Elektronikaufnahmeraum verhindern kann. In die Ventilaufnahme wir der Ventileinsatz eingesetzt. Die Wandung, welche den Ventilaufnahmeraum von dem Elektronikaufnahmeraum trennt, liegt vorzugsweise in einem Bereich der Ventilaufnahme, welcher durch einen eingesetzten und abgedichteten Ventileinsatz von dem Strömungsweg getrennt ist, das heißt in einem trockenen Teil der Ventilaufnahme. So dient die Wandung vorzugsweise nicht der direkten Abdichtung des Elektronikaufnahmeraumes gegenüber dem Strömungsweg.

Weiter bevorzugt ist in der Wandung ein Fenster ausgebildet, durch welches hindurch eine optische Verbindung von dem Infrarot-Temperatursensor zu der Oberfläche des Ventileinsatzes gegeben ist, oder der beschriebene Wärmeleiter erstreckt sich durch die Wandung hindurch. Ein solches Fenster kann beispielsweise aus Glas oder einem transparenten Kunststoffmaterial ausgebildet sein. Vorzugsweise ist ein das Fenster verschließendes Material bzw. Element dicht mit den übrigen Teilen des Ventilgehäuses verbunden, insbesondere stoffschlüssig verbunden. Besonders bevorzugt kann ein solches transparentes Fenster gemeinsam mit dem Ventilgehäuse im Spritzguss gefertigt werden. So kann das das Fenster bildende Material mit in das Ventilgehäuse eingegossen werden. Sofern das Fenster durch ein transparentes Material verschlossen ist, ist das Material so gewählt, dass es für die zu erfassenden Wellenlängen, das heißt im Infrarotbereich ausreichend transparent ist. Alternativ kann das Fenster als Öffnung ausgebildet sein. Für den Fall, das sich ein Wärmeleiter durch die Wandung hindurch erstreckt, können in der Wandung ein oder mehrere Öffnungen vorgesehen sein, durch welche sich der Wärmeleiter erstreckt. Dabei kann der Wärmeleiter gegenüber den Rändern der Öffnungen abgedichtet sein. Dies ist jedoch nicht zwingend erforderlich. Auch wäre es möglich, den Wärmeleiter in das Kunststoffmaterial der Wandung einzugießen, so dass eine dichte und stoffschlüssige Verbindung zwischen Wärmeleiter und Ventilgehäuse gegeben ist. Wenn der Ventileinsatz, wie oben beschrieben, in die Ventilaufnahme bzw. das Ventilgehäuse beim Gießen des Ventilgehäuses eingegossen wird, ist es darüber hinaus möglich, einen Abschnitt des Ventileinsatzes, welcher die Oberfläche aufweist, auf welche der Temperatursensor gerichtet ist, so in die Wandung zwischen Ventilaufnahme und Elektronikaufnahmeraum einzugießen, dass sich der Ventileinsatz durch diese Wandung hindurch erstreckt und die Oberfläche in dem Elektronikaufnahmeraum gelegen ist, während der Rest des Ventileinsatzes in der Ventilaufnahme angeordnet ist. So wird eine wärmeleitende Verbindung durch die Wandung, welche Ventilaufnahme und Elektronikaufnahme trennt, geschaffen.

Neben dem beschriebenen hydraulischen Ventil ist Gegenstand der Erfindung ein hydraulischer Verteiler zur Verwendung in einem hydraulischen Heizungs- und/oder Kühlsystem, welcher ein oder mehrere hydraulische Ventile gemäß der vorangehenden Beschreibung aufweist. Ein solcher hydraulischer Verteiler ist besonders bevorzugt zum Einsatz in einem hydraulischen Heizungs- und/oder Kühlsystem angepasst. Ein solcher hydraulischer Verteiler kann in dem Heizungs- und/oder Kühlsystem beispielsweise dazu dienen, mehrere Lastkreise so mit einer Wärme- und/oder Kältequelle zu verbinden, dass der Durchfluss eines Wärmeträgers, insbesondere Wasser, durch die Lastkreise über die Ventile in dem hydraulischen Verteiler individual reguliert werden kann. Besonders bevorzugt ist ein derartiger hydraulischer Verteiler modular aufgebaut, indem eine gewünschte Anzahl hydraulischer Ventile zu einem solchen hydraulischen Verteiler zusammengefügt ist. Vorzugsweise sind die einzelnen Ventile dabei gegeneinander thermisch isoliert oder die Ventilgehäuse weisen, wie oben beschrieben, thermisch isolierende Eigenschaften auf. Alternativ können auch in der oben beschrieben Weise die Ventileinsätze gegenüber den Ventilgehäusen thermisch isoliert sein. So wird sichergestellt, dass die Temperaturmessung in einem der hydraulischen Ventile nicht durch Temperaturänderungen in einem anderen der hydraulischen Ventile beeinflusst wird.

Besonders bevorzugt ist der hydraulische Verteiler derart ausgebildet, dass der hydraulische Verteiler mehrere der beschriebenen hydraulischen Ventile aufweist, wobei diese derart miteinander verbunden sind, dass zumindest die ersten Strömungswege der hydraulischen Ventile miteinander verbunden sind. Sollten die hydraulischen Ventile in einer bevorzugten Ausgestaltung zwei Strömungswege aufweisen, können die Ventile auch so zusammengefügt sein, dass sowohl die ersten als auch die zweiten Strömungswege der einzelnen Ventile so miteinander verbunden sind, dass ein durchgängiger erster Strömungskanal und ein durchgängiger zweiter Strömungskanal, welche sich durch alle Ventile erstrecken, gebildet werden. Die einzelnen Ventile können entsprechend hydraulische Anschlüsse zu dem ersten Strömungskanal und/oder dem zweiten Strömungskanal aufweisen, so dass an die Ventile jeweils ein Lastkreis angeschlossen werden kann und dieser über die Ventile mit den durchgängigen Strömungskanälen verbunden wird. Wenn lediglich ein Strömungsweg in dem Verteiler bzw. den Ventilen vorgesehen ist, so kann dieser in einem Heizungs- und/oder Kühlsystem als Vor- oder als Rücklauf dienen. Sind zwei Strömungswege vorgesehen, dient bevorzugt einer als Vorlauf und einer als Rücklauf.

Nachfolgend wird die Erfindung beispielhaft anhand der beigefügten Figuren beschrieben. In diesen zeigt:
- Fig. 1: eine Explosionsansicht eines erfindungsgemäßen hydraulischen Ventils,
- Fig. 2: eine Schnittansicht des hydraulischen Ventils gemäß Fig. 1 im zusammengebauten Zustand,
- Fig. 3: eine Schnittansicht eines hydraulischen Ventils gemäß einer zweiten Ausführungsform der Erfindung,
- Fig. 4: eine Schnittansicht eines hydraulischen Ventils gemäß einer dritten Ausführungsform der Erfindung und
- Fig. 5: eine Draufsicht auf einen hydraulischen Verteiler mit mehreren erfindungsgemäßen hydraulischen Ventilen.

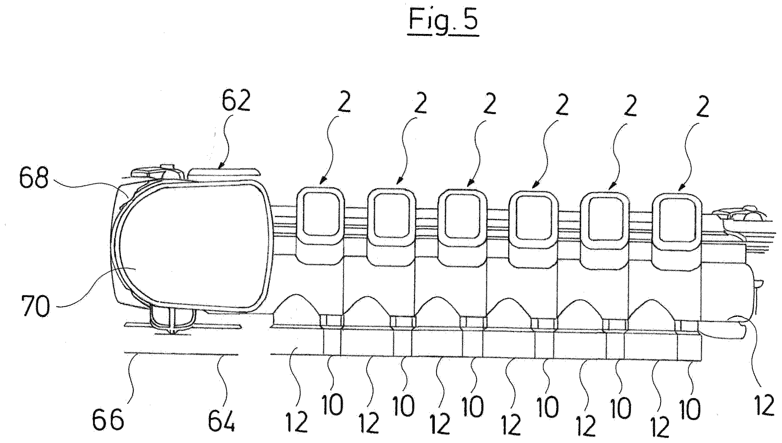

Das gezeigte hydraulische Ventil ist vorgesehen zur Verwendung in einer hydraulischen Heizungs- und/oder Kühlanlage, in welcher ein flüssiger Wärmeträger, insbesondere Wasser, verwendet wird, um Wärme von einer Wärmequelle, beispielsweise einem Heizkessel, zu einem zu heizenden Objekt zu transportieren oder in umgekehrter Richtung Wärme aus einem zu kühlenden Objekt an eine Kühleinrichtung abzuführen. Auch eine kombinierte Heizungs- und/oder Kühlanlage ist möglich. Eine solche kann beispielsweise im Winter heizen und im Sommer kühlen. Das gezeigte hydraulische Ventil 2 dient dazu, den Durchfluss durch einen Lastkreis in einem solchen Heizungs- und/oder Kühlsystem zu regulieren. Dabei ist das gezeigte hydraulische Ventil 2 so ausgebildet, dass mehrere derartige Ventile 2 zu einem hydraulischen Heizungs- und/oder Kühlsystemverteiler, wie er in Fig. 5 gezeigt ist, zusammengefügt werden können.

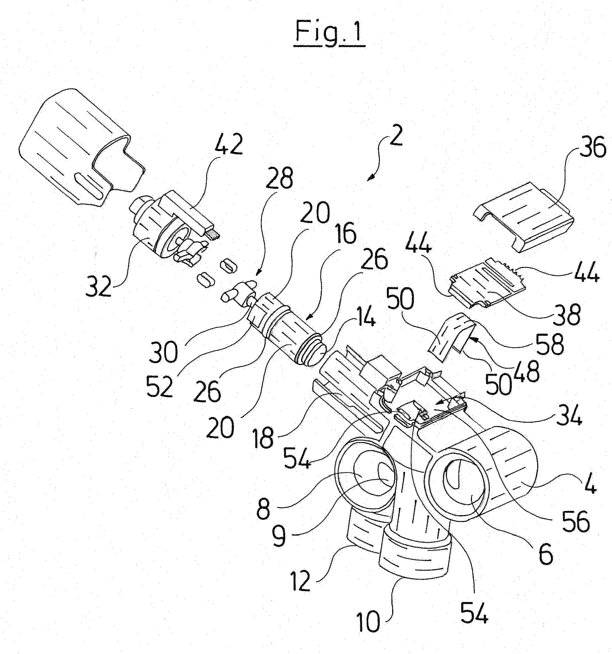

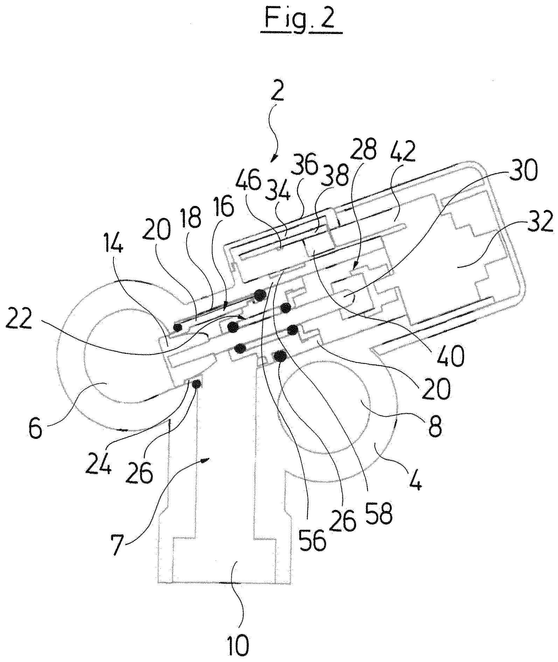

Die Fig. 1 und 2 zeigen ein erstes Ausführungsbeispiel für ein solches hydraulisches Ventil 2. Als zentralen Bestandteil weist das Ventil ein Ventilgehäuse 4 auf, welches beispielsweise als Spritzgussteil aus Kunststoff gefertigt sein kann. Das Ventilgehäuse 4 definiert in seinem Inneren einen ersten Strömungskanal 6 sowie einen zweiten Strömungskanal 8. Die Strömungskanäle 6 und 8 sind als gerade Kanäle ausgebildet, welche sich nebeneinander, in diesem Beispiel parallel zueinander, von einem ersten zu einem zweiten entgegengesetzten Ende des Ventilgehäuses 4 erstrecken. Von dem ersten Strömungskanal 6 zweigt ein erster hydraulischer Anschluss 10 und von dem zweiten Strömungskanal 8 zweigt ein zweiter hydraulischer Anschluss 12 ab. Die Verbindung von dem zweiten Strömungskanal 8 zu dem zweiten hydraulischen Anschluss 12 ist dabei mit einem festen nicht veränderbaren Querschnitt ausgebildet, während in der Verbindung von dem ersten Strömungsweg 6 zu dem ersten hydraulischen Anschluss 10 ein Ventilelement 14 gelegen ist. Die Verbindung von dem ersten Strömungskanal 6 zu dem ersten hydraulischen Anschluss 10 bildet einen ersten Strömungsweg 7, während die Verbindung von dem zweiten Strömungskanal 8 zu dem zweiten hydraulischen Anschluss 12 einen zweiten Strömungsweg 9 bildet. Das Ventilelement 14 ist, wie nachfolgend beschrieben ist, bewegbar, um den Strömungsquerschnitt durch den ersten Strömungsweg 7 zu dem ersten hydraulischen Anschluss 10 zu regulieren und vorzugsweise vollständig zu verschließen.

Wenn dieses Ventil in einem Heizungs- und/oder Kühlsystem eingesetzt wird, bilden der zweite Strömungskanal und der zweite Strömungsweg 9 vorzugsweise einen Vorlauf, während der erste Strömungskanal und der erste Strömungsweg 7 einen Rücklauf bilden. An den ersten hydraulischen Anschluss 10 wird entsprechend der Rücklauf eines Lastkreises angeschlossen, während an dem zweiten hydraulischen Anschluss 12 der Vorlauf des Lastkreises angeschlossen wird. So ist der Querschnitt im Rücklauf von dem ersten hydraulischen Anschluss in den ersten Strömungskanal 6 durch das Ventilelement 14 regulierbar.

Das Ventilelement 14 ist an einem Ventileinsatz 16 gelegen, welcher in eine Ventilaufnahme 18 in dem Ventilgehäuse 4 eingesetzt ist. Die Ventilaufnahme 18 ist nach außen geöffnet, so dass der Ventileinsatz 16 von außen in das Ventilgehäuse 4 eingesetzt und aus diesem, beispielsweise zu Wartungszwecken, auch wieder entnommen werden kann. Alternativ wäre es möglich, den Ventileinsatz in die Ventilaufnahme des Ventilgehäuses einzugießen, indem der Ventileinsatz vor dem Gießen des Ventilgehäuses in das Spritzgusswerkzeug eingesetzt wird und das Ventilgehäuse um den Ventileinsatz herum gegossen wird. So würde eine feste und dichte Verbindung zwischen Ventileinsatz und Ventilgehäuse geschaffen.

Der Ventileinsatz 16 weist ein im Wesentlichen rohrförmiges Trägerelement 20 auf, in welchem ein Spindeltrieb 22 als Teil des Ventileinsatzes 16 gelagert ist. In dem Trägerelement 20 ist ferner ein Ventilsitz 24 ausgebildet, gegen welchen das Ventilelement 14 abdichtet und von welchem das Ventilelement 14 linear wegbewegt werden kann, um den Strömungsdurchgang zu öffnen. Der Ventileinsatz 16 ist mit zwei O-Ringen 26 gegenüber der Innenwandung der Ventilaufnahme 18 abgedichtet, wobei durch einen Bereich zwischen den beiden O-Ringen 26 der erste Strömungsweg 7 verläuft. In diesem Bereich weist das rohrförmige Trägerelement 20 eine Öffnung auf, so dass ein Strömungsdurchgang zu dem Ventilsitz 24 gebildet wird.

An seinem dem Ventilelement 14 abgewandten Ende weist der Ventileinsatz 16 eine Kupplung 28 auf, über welche die Spindel 30 mit einem Antriebsmotor 32 gekoppelt ist.

Das Ventilgehäuse 4 weist darüber hinaus einen Elektronikaufnahmeraum 34 auf, welcher an seiner Oberseite durch einen abnehmbaren Deckel 36 verschlossen ist. Im Inneren des Elektronikaufnahmeraumes 34 unter dem Deckel 36 ist eine Leiterplatte 38 angeordnet, welche elektrische und elektronische Bauelemente zur Ansteuerung bzw. Regelung des Antriebsmotors 32 trägt. Dazu ist die Leiterplatte 38 über einen Verbindungsstecker 40 mit einem Anschlusselement 42 des Antriebsmotors 32 verbunden. Ferner weist die Leiterplatte 38 elektrische Anschlüsse 44 zum elektrischen Anschluss und zur Datenkommunikation mit einer externen Steuereinrichtung auf. Dabei sind die elektrischen Anschlüsse 44 vorzugsweise zur Verbindung mit den elektrischen Anschlüssen 44 eines weiteren Ventils 2 ausgebildet.

Um die Temperatur des durch den ersten Strömungsweg 7 von dem ersten hydraulischen Anschluss 10 in den ersten Strömungsweg 6 strömenden Mediums zu erfassen, ist an der Leiterplatte 38 ein Infrarot-Temperatursensor 46 angeordnet. Dieser ist so gerichtet, dass er in Richtung des Bodens des Elektronikaufnahmeraums 34 und der darunter gelegenen Ventilaufnahme 18 blickt. Das Trägerelement 20 des Ventileinsatzes 16 ist bevorzugt aus Metall, beispielsweise Messing gefertigt und in direktem Kontakt mit dem Medium, insbesondere Wasser, welches durch den ersten hydraulischen Anschluss 10 und den Spalt zwischen Ventilelement 14 und Ventilsitz 24 in dem ersten Strömungsweg 7 strömt. Dadurch überträgt sich die Temperatur dieses Mediums auf das Trägerelement 20. Das Trägerelement 20 ist in seinem trockenen Bereich, das heißt in einem Bereich außerhalb der O-Ringe 26 an einer den Ventilelement 14 abgewandten Seite in Anlage mit einem bügelförmigen Wärmeleiter 48. Dieser Wärmeleiter 48 ist ebenfalls aus Metall, vorzugsweise aus Messing ausgebildet und liegt mit seinen beiden freien Schenkeln 50 an zwei diametral entgegengesetzten Anlageflächen 52 an der Außenseite des Trägerelementes 20 wärmeleitend an. In dem hier gezeigten Beispiel ist das Trägerelement 20 zweiteilig ausgebildet, es ist jedoch zu verstehen, dass das Trägerelement 20 auch einteilig oder aus mehr als zwei Teilen gebildet sein könnte. Dabei sind jedoch vorzugsweise alle Teile des Trägerelementes 20 wärmeleitend ausgebildet und wärmeleitend miteinander in Verbindung, so dass die Temperatur des Mediums, welches den ersten Strömungsweg 7 im Inneren des Trägerelementes 20 strömt, zu den Anlageflächen 52 hin übertragen wird. Von den Anlageflächen 52 überträgt sich die Wärme auf die Schenkel 50 des Wärmeleiters 48.

Die freien Schenkel 50 des Wärmeleiters 48 erstrecken sich durch Löcher 54 in der Wandung 56, welche den Elektronikaufnahmeraum 34 von der Ventilaufnahme 18 trennt. Die Wandung 56 bildet den Boden des Elektronikaufnahmeraumes 34. Wenn der Wärmeleiter 48 mit seinen Schenkeln 50 in die Löcher 54 eingesetzt ist, kommen diese Schenkel 50 im Inneren der Ventilaufnahme 18 an den Anlageflächen 52 des Ventileinsatzes 16 wärmeleitend zur Anlage, während der Verbindungsabschnitt 58, welcher die Schenkel 50 zu einer U-Form miteinander verbindet, auf den Boden des Elektronikaufnahmeraumes 34, in dessen Inneren zu liegen kommt. Der Verbindungsabschnitt 58 liegt dem Infrarot-Temperatursensor 46 gegenüber, so dass dieser die Temperatur an der Oberfläche des Verbindungsabschnittes 58 erfassen kann. Da der Verbindungsabschnitt 58 über die Schenkel 50, die Anlageflächen 52 und das Trägerelement 20 in wärmeleitender Verbindung mit dem Medium im Inneren des ersten Strömungsweges 7, das heißt in dem Strömungsweg 7 von dem ersten hydraulischen Anschluss 10 zu dem ersten Strömungskanal 6 ist, kann so indirekt die Temperatur dieses Mediums erfasst werden. Dabei liegt der Temperatursensor 46 außerhalb des nassen Bereiches des Ventils geschützt im Inneren des Elektronikaufnahmeraumes 34.

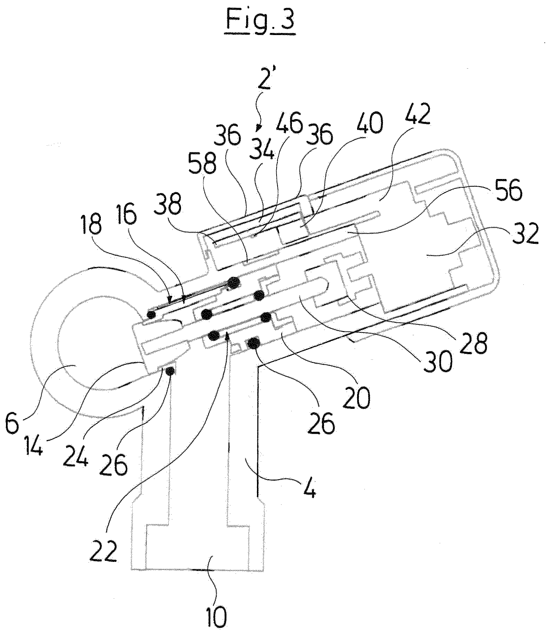

Die Ausführungsform gemäß Fig. 3 unterscheidet sich von der anhand von Fig. 1 und 2 beschriebenen Ausführungsform darin, dass der zweite Strömungskanal 8 und der zugehörige zweite hydraulische Anschluss 12 entfallen. Alle übrigen Teile sind in gleicher Weise ausgebildet, so dass auf die vorangehende Beschreibung verwiesen wird. Ein solches Ventil 2', wie es in Fig. 3 gezeigt ist, liegt beispielsweise im Rücklauf eines Heiz- bzw. Lastkreises, während der Vorlauf separat durch einen getrennten Verteiler geführt werden kann.

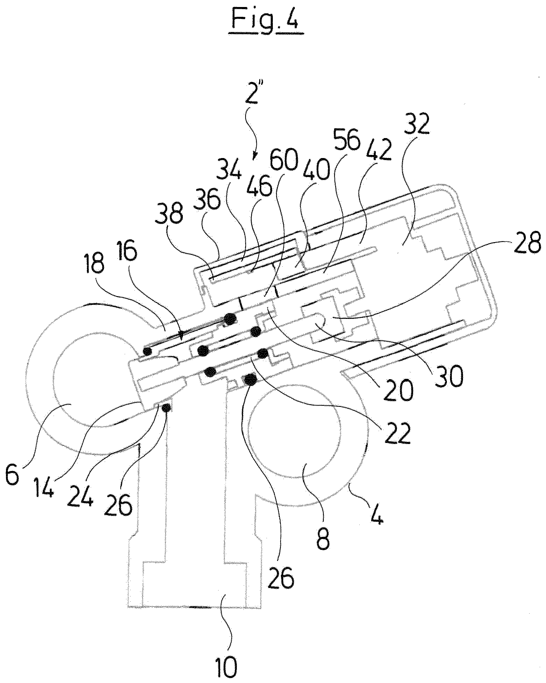

Fig. 4 zeigt eine dritte bevorzugte Ausführungsform, bei welcher das gezeigte Ventil 2" ähnlich zu dem Ventil gemäß Fig. 1 und 2 ausgebildet ist. Das in Fig. 4 gezeigte Ventil 2" unterscheidet sich von dem in Fig. 1 und 2 gezeigten Ventil 2 darin, dass kein Wärmeleiter 48 verwendet wird und das statt der Löcher 54 in der Wandung 56 ein Fenster 60 ausgebildet ist, durch welches der Infrarot-Temperatursensor 46 direkt auf die Außenseite des Trägerelementes 20 bzw. des Ventileinsatzes 16 blickt. Das Fenster 60 kann als Öffnung in der Wandung 56 ausgebildet sein, jedoch auch mit einem transparenten Material, beispielsweise Glas oder einem transparenten Kunststoff dicht verschlossen sein, wobei das Material des Fensters 60 dann für die zu erfassenden Wellenlängen, insbesondere Infrarotstrahlung, transparent ist. Mit einem solchen verschlossenen Fenster 60 ist es möglich, den Elektronikaufnahmeraum 34 gegenüber der Ventilaufnahme 18 vollständig geschlossen auszubilden, so dass das Eindringen von Feuchtigkeit verhindert werden kann. Bezüglich der übrigen Bauteile und Funktionen wird auf die Beschreibung mit Bezug zu Fig. 1 und 2 verwiesen. Anstelle der Ausgestaltung des Fensters 60 könnte das Trägerelement 20 auch so geformt sein, dass es sich durch die Wandung 56 hindurch erstrecken kann. Ein solches Trägerelement könnte beispielsweise direkt in die Wandung 56 eingegossen werden.

Allen drei gezeigten Ausführungsbeispielen gemeinsam ist, dass das Trägerelement 20 des Ventileinsatzes 16 wärmeleitend aus Metall ausgebildet ist, während das Ventilgehäuse 4 aus einem schlechter wärmeleitenden, das heißt thermisch isolierenden Kunststoffmaterial, gegebenenfalls einem Kunststoff-Komposit-Material gefertigt ist. Dadurch wird sichergestellt, dass eine Wärmezufuhr und/oder -abfuhr über das Ventilgehäuse 4 die beschriebene Temperaturmessung im Wesentlichen nicht beeinflussen kann, da eine solche Wärmezufuhr oder -abfuhr über das Ventilgehäuse 4 im Vergleich zu der Wärmeleitung über den Ventileinsatz 16 gering ist.

Fig. 5 zeigt die Kombination mehrerer Ventile 2, welche aneinandergereiht einen hydraulischen Verteiler, beispielsweise für eine Heizungs- und/oder Kühlanlage bilden. Hier sind die Ventile 2 gezeigt, es ist jedoch zu verstehen, dass in entsprechender Weise auch die Ventile 2' oder 2" gemäß Fig. 3 und 4 aneinandergereiht werden könnten. Die aneinandergereihten Ventile 2 sind identisch und so aneinandergereiht, dass jeweils ihre Strömungskanäle 6 und Strömungskanäle 8 (soweit vorhanden) miteinander fluchten, so dass von den Strömungskanälen 6 und 8 durchgehende Strömungskanäle gebildet werden. Jedes Ventil 2 dient zum Anschluss eines Lastkreises über seinen ersten hydraulischen Anschluss 10 und seinen zweiten hydraulischen Anschluss 12. Im Falle des Ausführungsbeispiels gemäß Fig. 3 wäre nur ein erster hydraulischer Anschluss 10 und ein erster Strömungskanal 6 vorgesehen. An das erste Ventil 2 ist ein Hauptmodul 62 angesetzt, welches die Zuleitung bzw. Ableitung zu den ersten und zweiten Strömungskanälen 6 und 8 herstellt und dazu einen Vorlaufanschluss 64 und einen Rücklaufanschluss 66 aufweist. Ferner ist in dem Hauptmodul 62 in diesem Ausführungsbeispiel ein Umwälzpumpenaggregat 68 angeordnet, welches vorzugsweise im Strömungsweg von dem Vorlaufanschluss 64 zu dem zweiten Strömungskanal 8 in den Ventilen 2, welcher den Vorlauf bildet, gelegen ist. Das Umwälzpumpenaggregat 68 weist ein Elektronikgehäuse 70 auf, in welchem eine Steuereinrichtung zur Steuerung des Umwälzpumpenaggregates 68 und/oder zur Steuerung der einzelnen Ventile 2 gelegen ist. Die Steuerelektronik ist dazu mit den elektrischen Anschlüssen 44 der Leiterplatten 38 verbunden, auf welchen die elektronischen Bauteile zur Ansteuerung des Antriebsmotors 32 jedes Ventils 2 gelegen sind. An dem dem Hauptmodul 6 abgewandten Ende ist die Reihe von Ventilen 2 durch ein Abschlussmodul 72 abgeschlossen. Das Abschlussmodul 72 verschließt insbesondere die Strömungskanäle 6 und 8 am Ende des hydraulischen Verteilers.

### Bezugszeichenliste

- 2, 2', 2": Ventil
- 4: Ventilgehäuse
- 6: erster Strömungskanal
- 7: erster Strömungsweg
- 8: zweiter Strömungskanal
- 9: zweiter Strömungsweg
- 10: erster hydraulischer Anschluss
- 12: zweiter hydraulischer Anschluss
- 14: Ventilelement
- 16: Ventileinsatz
- 18: Ventilaufnahme
- 20: Trägerelement
- 22: Spindeltrieb
- 24: Ventilsitz
- 26: O-Ringe
- 28: Kupplung
- 30: Spindel
- 32: Antriebsmotor
- 34: Elektronikaufnahmeraum
- 36: Deckel
- 38: Leiterplatte
- 40: Verbindungsstecker
- 42: Anschlusselement
- 44: elektrische Anschlüsse
- 46: Infrarot-Temperatursensor
- 48: Wärmeleiter
- 50: Schenkel
- 52: Anlageflächen
- 54: Löcher
- 56: Wandung
- 58: Verbindungsabschnitt
- 60: Fenster
- 62: Hauptmodul
- 64: Vorlaufanschluss
- 66: Rücklaufanschluss
- 68: Umwälzpumpenaggregat
- 70: Elektronikgehäuse
- 72: Abschlussmodul

## Patentansprüche

1. Hydraulisches Ventil mit einem Ventilgehäuse (4), welches in seinem Inneren zumindest einen ersten Strömungsweg (7) definiert, und einem in dem Inneren des Ventilgehäuses (4) angeordneten Ventileinsatz (16), welcher ein in dem ersten Strömungsweg (7) gelegenes bewegliches Ventilelement (14) aufweist, **dadurch gekennzeichnet, dass** an oder in dem Ventilgehäuse (4) ein Infrarot-Temperatursensor (46) angeordnet ist, welcher auf eine Oberfläche des Ventileinsatzes (16) oder eine Oberfläche eines mit dem Ventileinsatz verbundenen Wärmeleiters (48) gerichtet ist, wobei ein Abschnitt des Ventileinsatzes (16), an welchem die Oberfläche gelegen ist, auf welche der Infrarot-Temperatursensor (46) gerichtet ist, oder der Wärmeleiter (48) aus einem Material gefertigt sind, welches eine größere Wärmeleitfähigkeit als das Material des Ventilgehäuses (4) aufweist.

2. Hydraulisches Ventil nach Anspruch 1, **dadurch gekennzeichnet, dass** in dem Ventilgehäuse (4) ein zweiter, von dem ersten Strömungsweg (7) getrennter Strömungsweg (9) ausgebildet ist.

3. Hydraulisches Ventil nach Anspruch 1 oder 2, **dadurch gekennzeichnet, dass** das Ventilgehäuse (4) aus Kunststoff oder einem Kunststoff-Komposit-Material gefertigt ist.

4. Hydraulisches Ventil nach einem der vorangehenden Ansprüche, **dadurch gekennzeichnet, dass** der Ventileinsatz (16) und/oder der Wärmeleiter (48) gegenüber dem Ventilgehäuse (4) thermisch isoliert sind.

5. Hydraulisches Ventil nach einem der vorangehenden Ansprüche, **dadurch gekennzeichnet, dass** der Ventileinsatz (16) zumindest in einem Abschnitt, an welchem die Oberfläche gelegen ist, auf welche der Infrarot-Temperatursensor (46) gerichtet ist, oder mit welchem der Wärmeleiter (48) in Kontakt ist, aus Metall oder einem wärmeleitenden Kunststoff-Komposit-Material gefertigt ist.

6. Hydraulisches Ventil nach einem der vorangehenden Ansprüche, **dadurch gekennzeichnet, dass** dasjenige Bauteil des Ventileinsatzes (16), welches die Oberfläche aufweist, auf welche der Infrarot-Temperatursensor (46) gerichtet ist, oder mit welchem der Wärmeleiter (48) in Kontakt ist, derart ausgebildet ist, dass es in einem von der Oberfläche oder dem Wärmeleiter (48) beabstandeten Bereich in direkten Kontakt mit einem in einem Strömungsweg, vorzugsweise dem ersten Strömungsweg befindlichen Fluid kommt.

7. Hydraulisches Ventil nach einem der vorangehenden Ansprüche, **dadurch gekennzeichnet, dass** dasjenige Bauteil des Ventileinsatzes (16), welches die Oberfläche aufweist, auf welche der Infrarot-Temperatursensor (46) gerichtet ist, oder mit welchem der Wärmeleiter (48) in Kontakt ist, außerhalb eines Strömungsweges, vorzugsweise des ersten Strömungsweges, in einem gegenüber diesem Strömungsweg abgedichteten Bereich gelegen ist.

8. Hydraulisches Ventil nach einem der vorangehenden Ansprüche, **dadurch gekennzeichnet, dass** der Ventileinsatz (16) ein Trägerelement (20) aufweist, in welchem das Ventilelement (14) beweglich gelagert ist, wobei das Trägerelement (20) vorzugsweise aus Metall oder einem Kunststoff-Komposit-Material gefertigt ist.

9. Hydraulisches Ventil nach Anspruch 8, **dadurch gekennzeichnet, dass** das Trägerelement (20) in eine Ventilaufnahme (18) des Ventilgehäuses (4) eingesetzt ist, wobei zwischen dem Trägerelement und dem Ventilgehäuse (4) vorzugsweise zumindest eine Dichtung (26) angeordnet ist.

10. Hydraulisches Ventil nach Anspruch 8 oder 9, **dadurch gekennzeichnet, dass** das Ventilelement (14) in dem Trägerelement (20) an einem Spindeltrieb (22) oder Getriebeantrieb gelagert ist.

11. Hydraulisches Ventil nach einem der vorangehenden Ansprüche, **dadurch gekennzeichnet, dass** das Ventilgehäuse (4) einen Elektronikaufnahmeraum (34) aufweist, in welchem der Infrarot-Temperatursensor (46), vorzugsweise an einer Leiterplatte (38), angeordnet ist.

12. Hydraulisches Ventil nach Anspruch 11, **dadurch gekennzeichnet, dass** es einen das Ventilelement (14) bewegenden elektrischen Antrieb (32) aufweist und in dem Elektronikaufnahmeraum (34) elektronische Bauteile, welche zur Ansteuerung des elektrischen Antriebes (32) dienen, angeordnet sind.

13. Hydraulisches Ventil nach Anspruch 11 oder 12, **dadurch gekennzeichnet, dass** der Elektronikaufnahmeraum (34) von der Ventilaufnahme (18) durch eine Wandung (56) getrennt ist, welche vorzugsweise einstückig mit dem Ventilgehäuse (4) ausgebildet ist.

14. Hydraulisches Ventil nach Anspruch 13, **dadurch gekennzeichnet, dass** in der Wandung (56) ein Fenster (60) ausgebildet ist, durch welches hindurch eine optische Verbindung von dem Infrarot-Temperatursensor (46) zu der Oberfläche des Ventileinsatzes (16) gegeben ist, oder dass sich der Wärmeleiter (48) durch die Wandung (56) hindurch erstreckt.

15. Hydraulischer Verteiler zur Verwendung in einem hydraulischen Heizungs- und/oder Kühlsystem, **gekennzeichnet durch** ein oder mehrere hydraulische Ventile (2) gemäß einem der vorangehenden Ansprüche.

16. Hydraulischer Verteiler nach Anspruch 15, **dadurch gekennzeichnet, dass** der hydraulische Verteiler mehrere der hydraulischen Ventile (2) aufweist, welche derart miteinander verbunden sind, dass zumindest die ersten Strömungswege (7) der hydraulischen Ventile (2) miteinander verbunden sind.

## Claims

1. A hydraulic valve with a valve housing (4) which in its inside defines at least one first flow path (7), and with a valve insert (16) which is arranged in the inside of the valve housing (4) and which comprises a movable valve element (14) which is situated in the first flow path (7), **characterised in that** an infrared temperature sensor (46) is arranged on or in the valve housing (4) and is directed onto a surface of the valve insert (16) or onto a surface of a thermal conductor (48) which is connected to the valve insert, wherein a section of the valve insert (16), on which the surface onto which the infrared temperature sensor (46) is directed is located or the thermal conductor (48) are formed from a material which has a greater thermal conductivity than the material of the valve housing (4).

2. A hydraulic valve according to claim 1, **characterised in that** a second flow path (9) which is separated from the first flow path (7) is formed in the valve housing (4).

3. A hydraulic valve according to claim 1 or 2, **characterised in that** the valve housing (4) is manufactured of plastic or a plastic-composite material.

4. A hydraulic valve according to one of the preceding claims, **characterised in that** the valve insert (16) and/or the thermal conductor (48) are thermally insulated with respect to the valve housing (4).

5. A hydraulic valve according to one of the preceding claims, **characterised in that** the valve insert (16) at least in a section, on which the surface onto which the infrared temperature sensor (46) is directed is located, or with which section the thermal conductor (48) is in contact, is manufactured from metal or a thermally conductive plastic composite material.

6. A hydraulic valve according to one of the preceding claims, **characterised in that** that component of the valve insert (16) which comprises the surface onto which the infrared temperature sensor (46) is directed, or with which component the thermal conductor (48) is in contact, is designed in a manner such that in a region which is distanced to the surface or to the thermal conductor (48) it comes into direct contact with a fluid which is located in a flow path, preferably in the first flow path.

7. A hydraulic valve according to one of the preceding claims, **characterised in that** that component of the valve insert (16) which comprises the surface, onto which the infrared temperature sensor (46) is directed, or with which component the thermal conductor (48) is in contact, is situated outside a flow path, preferably the first flow path, in a region which is sealed off with respect to this flow path.

8. A hydraulic valve according to one of the preceding claims, **characterised in that** the valve insert (16) comprises a carrier element (20), in which the valve element (14) is movably mounted, wherein the carrier element (20) is preferably manufactured of metal or a plastic composite material.

9. A hydraulic valve according to claim 8, **characterised in that** the carrier element (20) is inserted into a valve receiver (18) of the valve housing (4), wherein preferably at least one seal (26) is arranged between the carrier element and the valve housing (4).

10. A hydraulic valve according to claim 8 or 9, **characterised in that** the valve element (14) is mounted in the carrier element (20) on a spindle drive (22) or gear drive.

11. A hydraulic valve according to one of the preceding claims, **characterised in that** the valve housing (4) comprises an electronics receiving space (34), in which the infrared temperature sensor (46) is arranged, preferably on a circuit board (38).

12. A hydraulic valve according to claim 11, **characterised in that** it comprises an electrical drive (32) which moves the valve element (14), and electronic components which serve for the activation of the electrical drive (32) are arranged in the electronics receiving space (34).

13. A hydraulic valve according to one of the claims 11 or 12, **characterised in that** the electronics receiving space (34) is separated from the valve receiver (18) by a wall (56) which is preferably designed as one piece with the valve housing (4).

14. A hydraulic valve according to claim 13, **characterised in that** a window (60) is formed in the wall (56), through which window an optical connection from the infrared temperature sensor (46) to the surface of the valve insert (16) is given, or that the thermal conductor (48) extends through the wall (56).

15. A hydraulic manifold for use in a hydraulic heating system and/or cooling system, **characterised by** one or more hydraulic valves (2) according to one of the preceding claims.

16. A hydraulic manifold according to claim 15, **characterised in that** the hydraulic manifold comprises several of the hydraulic valves (2) which are connected to one another in a manner such that at least the first flow paths (7) of the hydraulic valves (2) are connected to one another.

## Revendications

1. Vanne hydraulique avec un carter de vanne (4) qui définit en son intérieur un premier trajet de flux (7), et avec un insert de vanne (16) disposé à l'intérieur du carter de vanne (4) et qui comprend un élément de vanne mobile (14) situé sur le premier trajet de flux (7), **caractérisée en ce qu'**un capteur infrarouge de température (46) est disposé sur ou dans le carter de vanne (4), qui est orienté sur une surface de l'insert de vanne (16) ou une surface d'un conducteur thermique (48) relié à l'insert de vanne, une partie de l'insert de vanne (16) sur laquelle ladite surface est située vers laquelle le capteur infrarouge de température (46) est orienté, ou le conducteur thermique (48) sont fabriqués en un matériau qui présente une conductivité thermique plus grande que le matériau du carter de vanne (4).

2. Vanne hydraulique selon la revendication 1, **caractérisée en ce qu'**un deuxième trajet de flux (9), séparé du premier trajet de flux (7), est formé dans le carter de vanne (4).

3. Vanne hydraulique selon la revendication 1 ou 2, **caractérisée en ce que** le carter de vanne (4) est réalisé en une matière synthétique ou en un matériau composite de matière synthétique.

4. Vanne hydraulique selon l'une des revendications précédentes, **caractérisée en ce que** l'insert de vanne (16) et/ou le conducteur thermique (48) sont isolés thermiquement par rapport au carter de vanne (4).

5. Vanne hydraulique selon l'une des revendications précédentes, **caractérisée en ce que**, au moins dans une zone où la surface est située vers laquelle le capteur infrarouge de température (46) est orienté ou avec laquelle le conducteur thermique (48) est en contact, l'insert de vanne (16) est réalisé en métal ou en un matériau composite de matière synthétique.

6. Vanne hydraulique selon l'une des revendications précédentes, **caractérisée en ce que** le composant de l'insert de vanne (16) qui comprend la surface vers laquelle le capteur infrarouge de température (46) est orienté ou avec le conducteur thermique (48) est en contact, est configuré de façon telle qu'il vienne en contact direct, dans une zone espacée de la surface ou du conducteur thermique (48), avec un fluide se trouvant dans un trajet de flux, de préférence dans le premier trajet de flux.

7. Vanne hydraulique selon l'une des revendications précédentes, **caractérisée en ce que** le composant de l'insert de vanne (16) qui comprend la surface vers laquelle le capteur infrarouge de température (46) est orienté ou avec le conducteur thermique (48) est en contact, est situé en dehors d'un trajet de flux, de préférence du premier trajet de flux, dans une zone étanche par rapport à ce trajet de flux.

8. Vanne hydraulique selon l'une des revendications précédentes, **caractérisée en ce que** l'insert de vanne (16) comprend un élément de support (20) dans lequel l'élément de vanne (14) est logé mobile, l'élément de support (20) étant fabriqué de préférence en métal ou en un matériau composite de matière synthétique.

9. Vanne hydraulique selon la revendication 8, **caractérisée en ce que** l'élément de support (20) est inséré dans un logement de vanne (18) du carter de vanne (4), de préférence, au moins un joint d'étanchéité (26) étant disposé entre l'élément de support et le carter de vanne (4).

10. Vanne hydraulique selon la revendication 8 ou 9, **caractérisée en ce que** l'élément de vanne (14) est supporté dans l'élément de support (20) sur un entraînement de broche (22) ou un entraînement à transmission.

11. Vanne hydraulique selon l'une des revendications précédentes, **caractérisée en ce que** le carter de vanne (4) comprend un espace de réception d'électronique (34) dans lequel le capteur infrarouge de température (46) est disposé, de préférence sur une carte de circuit imprimé (38).

12. Vanne hydraulique selon la revendication 11, **caractérisée en ce qu'**elle comprend un entraînement électrique (32) déplaçant l'élément de vanne (14) et que des composants électroniques servant à la commande de l'entraînement électrique (32) sont disposés dans l'espace de réception d'électronique (34).

13. Vanne hydraulique selon la revendication 11 ou 12, **caractérisée en ce que** l'espace de réception d'électronique (34) est séparé du logement de vanne (18) par une paroi (56) qui est formée, de préférence, en une seule pièce avec le carter de vanne (4).

14. Vanne hydraulique selon la revendication 13, **caractérisée en ce qu'**une fenêtre (60) est formée dans la paroi (56) à travers laquelle existe une liaison optique du capteur infrarouge de température (46) à la surface de l'insert de vanne (16) ou que le conducteur thermique (48) s'étend à travers la paroi (56).

15. Répartiteur hydraulique destiné à une utilisation dans un système hydraulique de chauffage et/ou de refroidissement, **caractérisé par** une ou plusieurs vannes hydrauliques selon l'une des revendications précédentes.

16. Répartiteur hydraulique selon la revendication 15, **caractérisé en ce que** le répartiteur hydraulique comprend plusieurs vannes hydrauliques qui sont reliées les unes aux autres de façon telle qu'au moins les premiers trajets de flux (7) des vannes hydrauliques (2) soient reliés les uns aux autres.
